**Europäisches Patentamt**

**European Patent Office**

**Office européen des brevets**

(11) Veröffentlichungsnummer: **0 093 985**
A2

# EUROPÄISCHE PATENTANMELDUNG

(21) Anmeldenummer: 83104244.5

(22) Anmeldetag: 30.04.83

(51) Int. Cl.³: **C 09 D 5/08,** C 09 D 1/08, C 09 D 3/74

---

(30) Priorität: 06.05.82 DE 3216969

(43) Veröffentlichungstag der Anmeldung: 16.11.83 Patentblatt 83/46

(84) Benannte Vertragsstaaten: **AT BE CH DE FR GB IT LI NL SE**

(71) Anmelder: **BASF Farben + Fasern Aktiengesellschaft, Am Neumarkt 30, D-2000 Hamburg 70 (DE)**

(72) Erfinder: **Augustin, Friedrich, Lindenbuschweg 101, D-5020 Frechen (DE)**

(74) Vertreter: **Habbel, Hans-Georg, Dipl.-Ing., Postfach 3429 Am Kanonengraben 11, D-4400 Münster (DE)**

---

(54) **Verfahren zur Herstellung eines korrosionsschützenden Überzuges.**

(57) Verfahren zur Herstellung eines korrosionsschützenden Überzuges auf einem Substrat aus Eisen, Stahl oder eisenhaltigen Legierung durch Aufbringen einer Überzugsmasse. Die Überzugsmasse enthält Zement, Füllstoffe und eine wäßrige, alkalibeständige und gegenüber mehrwertigen Metallionen beständige Dispersion eines Copolymerisats. Der Anteil des Copolymerisats beträgt 5–30 Gew.-%, bezogen auf die Überzugsmasse. Das Copolymerisat enthält 2 oder mehrere der folgenden monomeren Bausteine. Acrylsäure, Methacrylsäure, Ester der Acrylsäure, Ester der Methacrylsäure, Styrol, Butadien und/oder andere Vinylmonomere.

EP 0 093 985 A2

0093985

PAT 82 859
03.05.1982

BASF Farben + Fasern Aktiengesellschaft, Hamburg

Verfahren zur Herstellung eines korrosionsschützenden
Überzuges

Die Erfindung betrifft ein Verfahren zur Herstellung
eines korrosionsschützenden Überzuges auf einem Substrat
aus Eisen, Stahl oder einer eisenhaltigen Legierung durch
Aufbringen einer Überzugsmasse.

Das erfindungsgemäße Verfahren eignet sich insbesondere
für Stahlbauteile für den Stahlbetonbau. Bei fachgerechter Verarbeitung korrodiert in Beton eingelegter Bewehrungsstahl aufgrund des umgebenden alkalischen Milieus
nicht. Die einschlägigen Normen schreiben eine ausreichende Betonüberdeckung des Stahls und gegebenenfalls
geeignete Schutzschichten auf der Oberfläche des Betons
vor. In der Praxis kommt es trotzdem vielfach zu
Korrosionserscheinungen bei Bewehrungsstahl, und ein weiteres Problem ist der Schutz der Stahlbauteile während
der Lagerung bis zu ihrer Verwendung.

Die Korrosion der Bewehrungsstahls innerhalb des Betons
ist im wesentlichen darauf zurückzuführen, daß sich im
Laufe der Zeit eine Absenkung des pH-Wertes durch den
Einfluß von sauren Gasen und Wässern ergibt. Dieser Vorgang wird auch als Carbonatisation bezeichnet. Er beginnt
an der Oberfläche des Betons und setzt sich langsam in
das Innere fort.

Es ist Aufgabe der Erfindung, ein Verfahren anzugeben, durch das Stahlbauteile und insbesondere Bewehrungsstahl zuverlässig vor Korrosion geschützt werden. Die Stahlteile sollen dabei auch nach ihrer Einbettung in Beton ihren Korrosionsschutz behalten und durch die Carbonatisation des Betons nicht nachteilig beeinflußt werden. Weiterhin soll das Verfahren wirtschaftlich durchführbar sein und bei bereits angerostetem Stahl keine aufwendige Entrostung erfordern.

Überraschenderweise wurde nun gefunden, daß die Aufgaben gelöst werden durch die Aufbringung einer Überzugsmasse, die Zement, Füllstoffe und eine wäßrige Polymerdispersion enthält.

Gegenstand der Erfindung ist also ein Verfahren der eingangs genannten Art, das dadurch gekennzeichnet ist, daß eine Überzugsmasse verwendet wird, die Zement, Füllstoffe und eine wäßrige, alkalibeständige und gegenüber mehrwertigen Metallionen beständige Dispersion eines Copolymerisats enthält, wobei der Anteil des Copolymerisats 5 bis 30 Gew.-%, bezogen auf die Überzugsmasse, beträgt und das Copolymerisat zwei oder mehrere der folgenden monomeren Bausteine enthält: Acrylsäure, Methacrylsäure, Ester der Acrylsäure, Ester der Methacrylsäure, Styrol, Butadien und/oder andere Vinylmonomere.

Als Zement wird Portlandzement bevorzugt. Geeignete Füllstoffe sind beispielsweise Quarzsand und Quarzmehl. Gut bewährt haben sich Quarzsande und Quarzmehle mit einer sich ergänzenden Sieblinie von 10 $\mu$m bis 200 $\mu$m. Besonders geeignet sind ferner Füllstoffe mit blättchenförmiger Struktur, wie z.B. Eisenglimmer und gemahlene natürliche Glimmer sowie gröbere Talkumsorten.

Als weiteren Bestandteil enthält die Überzugsmasse eine wäßrige Kunstharzdispersion. Bevorzugt wird eine festkörperreiche Dispersion auf der Basis eines Acrylatcopolymerisats, das in wäßriger Phase unter Mitverwendung von Emulgatoren, Stabilisatoren und Katalysatoren hergestellt worden ist. Bei der Auswahl der geeigneten Dispersionen ist darauf zu achten, daß diese stabil sind gegenüber Alkalien und gegenüber mehrwertigen Metallionen. Es können auch acrylatfreie Copolymerisate verwendet werden, soweit diese verseifungsbeständig sind und bei Zugabe von Zement nicht koagulieren. Die Filmbildungstemperatur des Copolymerisats soll im Bereich von etwa 5 bis 10°C liegen, und sein mittlerer Teilchendurchmesser soll 0,1 bis 0,5 µm betragen.

Vorteilhaft enthält die Überzugsmasse zusätzlich Entschäumer, Verdickungsmittel, Stabilisierungsmittel und andere bekannte Hilfsstoffe. Da alle Kunststoffdispersionen obenflächenaktive Substanzen enthalten, die zur Schaumbildung und damit zur Porenbildung im getrockneten Film führen können, muß der Entschäumung der Überzugsmassen besondere Aufmerksamkeit geschenkt werden. Besonders bewährt haben sich mineralölhaltige und wasserdispergierbare Silikonentschäumer. Die Verarbeitbarkeit und Konsistenz der Überzugsmassen werden durch Verdickungs- und Stabilisierungsmittel verbessert. Geeignete Mittel sind niedermolekulare Methyl-, Ethyl- und Propylcellulosen sowie Methyl- und Ethylhydroxycellulosen. Ferner sind niedermolekulare Polyurethanverdickungsmittel geeignet.

Die Überzugsmassen können als weitere Hilfsstoffe Weichmacher enthalten. Hier werden ebenfalls unverseifbare Typen ausgewählt und gelöst in Solventnaphta in die Dispersion einemulgiert. Als Konservierungsmittel ist beispielsweise N-Methylolchloracetamid geeignet.

Zur Verbesserung des Korrosionsschutzes können Natriummetaborate und Phosphate in kleinen Mengen mitverwendet
werden. Als Korrosionsinhibitoren sind ferner ein Gemisch
von Natriumbenzoat und Natriumnitrit im Gewichtsverhältnis von etwa 9 : 1 geeignet.

Zur Durchführung des Verfahrens werden die beschriebenen
Bestandteile gemischt und durch Rühren zu einer einheitlichen Masse verarbeitet. Gegebenenfalls ist zur Erreichung einer geeigneten Konsistenz die Zugabe von
Wasser erforderlich. Die Überzugsmasse wird dann innerhalb von 4 - 5 Stunden durch Streichen, Spritzen, Fluten,
Tauchen, Walzen oder Rakeln auf das zu beschichtende
Stahlteil in einer solchen Menge in einem oder mehreren
Arbeitsgängen aufgebracht, daß sich eine Trockenfilmdicke von 0,5 bis 1 mm ergibt. Die Überzugsmasse härtet
nach dem Auftragen bei einer durchschnittlichen Temperatur von 15 - 20$^\circ$C und einer Luftfeuchtigkeit von etwa
50 bis 60 % innerhalb von 2 bis 3 Stunden zu einem
harten und zähelastischen, dickschichtigen Überzug aus.
Durch das erfindungsgemäße Verfahren wird ein wirkungsvoller und dauerhafter Korrosionsschutz erreicht. Ein
besonderer Vorteil des Verfahrens liegt darin, daß die
zu schützenden Stahlteile nicht aufwendig entrostet
werden müssen, wenn sie vor der Beschichtung bereits
korrodiert sind. Es reicht aus, lose anhaftenden Rost
maschinell oder von Hand zu entfernen. Wenn auch das
Verfahren insbesondere bei Stahlteilen für den Stahlbetonteil große Vorteile bietet, so ist es jedoch auch
zur Behandlung anderer Stahl- und Eisenteile, beispielsweise Stahlbrücken, Maschinen, Fahrzeugen und dergleichen gut geeignet. Bei den letztgenannten Anwendungen bilden die ausgehärteten Überzüge auch einen
guten Untergrund für eine dekorative Weiterbeschichtung,
beispielsweise mit wasserverdünnbaren Acrylatdispersionen, lösungsmittelhaltigen Polyurethanlacken oder
lösungsmittelarmen oder lösungsmittelfreien Epoxidharzlacken, wenn dies gewünscht wird. Im folgenden wird die Erfindung anhand von Ausführungsbeispielen näher erläutert.

Beispiel 1    (Einkomponenten-Produkt)

        45,2 Gew.-Teile Quarzmehl (120 mesh)
        22,5 Gew.-Teile Portlandzement 350 grau
        15,0 Gew.-Teile handelsübliche Acrylat-
                         dispersion 40 %ig
         0,1 Gew.-Teile Entschäumer  und
        17,2 Gew.-Teile Wasser

werden in einem Rührer gemischt.

Beispiel 2    (Einkomponenten-Produkt)

        17  Gew.-Teile Quarzmehl (120 mesh)
        34  Gew.-Teile Portlandzement 450 weiß
         0,5  "    "    Eisenoxid
         0,1  "    "    Methylcellulose n.V.
         0,1  "    "    Ammoniakwasser 25 % ig
         0,1  "    "    Entschäumer
        40,0  "    "    Acrylatdispersion, 45 %ig
         8,2  "    "    Wasser

Beispiel 3    (Zweikomponenten-Produkt)

        <u>Komponente I</u>

        42 Gew.-Teile Portlandzement 450 weiß
        43 Gew.-Teile Quarzmehl 0 - 0,2 mm
        14,9  "    "    Eisenglimmer
         0,1  "    "    Natriumglykonat

Komponente II

95 Gew.-Teile handelsübliche Acrylatdispersion 47 %ig
1 " " Polyurethanverdicker, 10 %ige Lösung
0,1 " " N-Methylolchloracetamid
0,5 " " Propylenglykol-Alkyl-Phenyläther
0,9 " " Mineralölentschäumer
2,5 " " Solventnaphta


Beispiel 4 (Zweikomponenten-Produkt)

Komponente I

50,0 Gew.-Teile Portlandzement 450 weiß
30,0 Gew.-Teile Quarzmehl 0 - 0,2 mm
10,0 Gew.-Teile Eisenglimmer
1,8 Gew.-Teile Eisenoxid braun
0,1 Gew.-Teil Natriumglykonat
0,1 Gew.-Teil Natriumbenzoat/
Natriumnitrit 9 : 1
5,0 Gew.-Teile gemahlener Glimmer 0,5 mm
3,0 Gew.-Teile Natriummetaborat

Komponente II

90,0 Gew.-Teile handelsübliche Acrylatdispersion, 45 %ig
5,0 Gew.-Teile Methylcellulose m.V.
3 %ige Lösung
0,1 Gew.-Teil Konservierungsstoff
2,0 Gew.Teile Benzylalkohol/
Butyldiglykol 1 : 1
1,0 Gew.-Teile Siliconentschäumer,
10 %ig
0,1 Gew.-Teile Natriumbenzoat/
Natriumnitrit 9 : 1
1,8 Gew.-Teile Titandioxidpaste, 50 %ig

0093985

Die Komponenten I und II aus Beispiel 3 und 4 werden jeweils wie folgt zu einer fertigen Korrosionsschutz-farbe gemischt:

1 Raumteil <u>Komponente II</u> wird in einem Behälter vorge-legt, anschließend werden

2 Raumteile <u>Komponente I</u> zugegeben und in Komponente II eingesumpft und mit einem langsam laufenden Rührer oder von Hand knotenfrei vermischt.

Die Mischung kann ebenso gewichtsmäßig hergestellt werden, indem

1      Gewichtsteil      Komponente II mit
2,4  Gewichtsteilen  Komponente I zusammen vermischt
                              werden.

Die nach den Beispielen 1 bis 4 erhaltenen Überzugsmassen werden auf Stahlbauteile und Stahlbleche aufgetragen. Es ergeben sich hervorragende Korrosionsschutz-überzüge.

Patentansprüche

1. Verfahren zur Herstellung eines korrosionsschützenden Überzuges auf einem Substrat aus Eisen, Stahl oder einer eisenhaltigen Legierung durch Aufbringen einer Überzugsmasse, dadurch gekennzeichnet, daß eine Überzugsmasse verwendet wird, die Zement, Füllstoffe und eine wäßrige, alkalibeständige und gegenüber mehrwertigen Metallionen beständige Dispersion eines Copolymerisats enthält, wobei der Anteil des Copolymerisats 5 bis 30 Gew.-%, bezogen auf die Überzugsmasse, beträgt und das Copolymerisat zwei oder mehrere der folgenden monomeren Bausteine enthält: Acrylsäure, Methacrylsäure, Ester der Acrylsäure, Ester der Methacrylsäure, Styrol, Butadien und/oder andere Vinylmonomere.

2. Verfahren nach Anspruch 1, dadurch gekennzeichnet, daß eine Überzugsmasse verwendet wird, die zusätzlich Kalkhydrat enthält.

3. Verfahren nach Anspruch 1 oder 2, dadurch gekennzeichnet, daß eine Überzugsmasse verwendet wird, die zusätzlich Entschäumer, Verdickungsmittel, Stabilisierungsmittel und andere bekannte Hilfsstoffe enthält.